# EUROPÄISCHE PATENTSCHRIFT

(11) **EP 0 593 888 B1**
(45) Veröffentlichungstag und Bekanntmachung des Hinweises auf die Patenterteilung: **22.04.1998**
(21) Anmeldenummer: 93114315.0
(22) Anmeldetag: 07.09.1993
(51) Int. Cl.: C08L 23/10, C08F 10/00

(54) **Verwendung einer Polyolefinformmasse zur Herstellung von Spritzguss-Formkörpern**
Use of a polyolefin composition for injection moulding
Utilisation d'un masse à base de polyoléfine pour le moulage par injection

(30) Priorität: 11.09.1992 DE 4230372
(43) Veröffentlichungstag der Anmeldung: 27.04.1994
(73) Patentinhaber: TARGOR GmbH, 55116 Mainz (DE)
(72) Erfinder: Winter, Andreas, Dr., D-61479 Glashütten/Taunus (DE); Bormuth, Horst, D-63329 Egelsbach (DE); Bachmann, Bernd, Dr., D-65817 Eppstein/Taunus (DE)

(56) Entgegenhaltungen:
- EP-A- 0 444 474
- EP-A- 0 485 822
- EP-A- 0 485 823

## Beschreibung

Die Erfindung bezieht sich auf eine sehr harte, transparente und steife Polyolefin-Formmasse für Spritzgußanwendungen.

Die Herstellung von Polyolefinen mit hoher Transparenz ist bekannt. Zu diesem Zweck werden sogenannte statistische Copolymere hergestellt, die im Vergleich mit den Homopolymeren deutlich transparenter sind. Als negative Eigenschaft tritt dabei jedoch eine deutliche Absenkung von Schmelzpunkt, Härte, Steifigkeit und Kratzfestigkeit im Vergleich mit den Homopolymeren ein (EP-A-0 433 987, EP-A-0 384 263).

Für eine Vielzahl von Spritzgußanwendungen ist eine Absenkung dieser Eigenschaften nicht tolerabel. Besonders gilt dies für den Dünnwandspritzguß; für die auf diese Weise hergestellten Formkörper, beispielsweise Trinkbecher, ist eine hohe Steifigkeit ein sehr wichtiges Kriterium und für die Auswahl des Rohstoffes entscheidend.

Verwendet wird für solche Anforderungen ein Polyolefin, beispielsweise ein Polypropylen, das nach der Polymerisation mittels eines Peroxides in einen zusätzlichen Verfahrensschritt chemisch behandelt wird.

Diese als CR-Polymere (CR = controlled rheology) bezeichneten Formmassen weisen zwei gravierende Nachteile auf:
1) der zusätzliche Peroxid-Verfahrensschritt verteuert die Produkte und
2) durch die Umsetzung mit Peroxid entstehen niedermolekulare Fragmente, die einen unangenehmen Geruch haben, den auch das aus dem Polymer hergestellte Formteil aufweist. Gerade bei beispielsweise Trinkbechern oder Lebensmittelverpackungen ist dieser Geruch unerwünscht.

Zusätzlich kann das Peroxid-Verfahren auch noch eine Gelbverfärbung des Polymeren verursachen und für das unerwünschte Fogging verantwortlich sein.

Aufgabe der vorliegenden Erfindung war somit die Bereitstellung einer Spritzguß-Formmasse, welche die aus dem Stand der Technik bekannten nachteiligen Eigenschaften nicht aufweist, das heißt, eine Formmasse, die durch hohe Transparenz und Steifigkeit gekennzeichnet ist und darüberhinaus geruchlos und ohne Gelbverfärbung ist.

Es wurde gefunden, daß bestimmte Polyolefinformmassen, die bevorzugt durch Polymerisation mit Metallocenkatalysatoren hergestellt werden können, ohne weitere Konditionierungsschritte, wie etwa einen Peroxid-Verfahrensschritt, den genannten Anforderungen genügen.

Darüberhinaus wurde überraschend gefunden, daß diese Polyolefinformmassen im direkten Vergleich mit CR-Polymeren in der Spritzgußmaschine deutlich kürzere Zycluszeiten ermöglichen, als weiterer Vorteil also der Durchsatz in der Maschine erhöht werden kann.

Die höhere Steifigkeit gegenüber den CR-Polymeren eröffnet darüberhinaus die Möglichkeit, die Wandstärken der Formteile zu reduzieren, was einer Einsparung an Rohstoff entspricht.

Gegenstand der vorliegenden Erfindung ist somit die Verwendung einer Polyolefinformmasse zur Herstellung von Spritzguß-Formkörpern, im wesentlichen bestehend aus einem Polyolefin, welches sich von einem Olefin mit mindestens 3 C-Atomen der Formel R^{a}-CH = CH-R^{b} ableitet, worin R^{a} und R^{b} gleich oder verschieden sind und Wasserstoff oder C₁-C₁₅-Alkyl (geradkettig oder verzweigt) bedeuten oder R^{a} und R^{b} mit den sie verbindenden Atomen einen Ring bilden. Die Polyolefinformmasse kann bis zu 10 Gew.-% Ethylen oder eines zweiten Olefins mit oben genannter Bedeutung als Comonomer enthalten.

Die Polyolefinformmasse hat eine Molmasse M_{w} > 80 000 g/mol, bevorzugt > 100 000 g/mol, eine Polydispersität M_{w}/Mₙ von 1,8 bis 3,5, bevorzugt 2,0 - 3,0, eine Viskositätszahl > 70 cm³/g, bevorzugt > 100 cm³/g, einen Schmelzpunkt von 130 bis 160 °C, bevorzugt 140 bis 160 °C, eine isotaktische Blocklänge von nᵢₛₒ = 30 - 100, eine gerichtete Transparenz > 30 %, bevorzugt > 35 %, und der etherextrahierbare Anteil ist kleiner als 2 Gew.-%, bevorzugt kleiner als 1 Gew.-%.

Die Polyolefinformmasse kann z. B. nach DE-P 40 35 886.0 (= EP-Anmeldung 0 485 822 A2) hergestellt werden.
Sie besteht im wesentlichen aus isotaktischen hochmolekularen Polyolefinen, von denen insbesondere Polypropylen zu nennen ist.

Außer dem Polyolefin kann die Formmasse noch die üblichen Zusatzstoffe enthalten, beispielsweise Nukleierungsmittel, Stabilisatoren, Antioxidanten, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel. Insbesondere wird die Verwendung von Nukleierungsmitteln bevorzugt. Dadurch werden sowohl die Steifigkeit, als auch die Transparenz nochmals deutlich verbessert. Dem Fachmann bekannte, geeignete Nukleierungsmittel sind großtechnisch verfügbar und beispielsweise feingemahlener Talkum, Natriumbenzoat oder Sorbitolderivate wie z. B. Benzylidensorbitolverbindungen oder Dibenzylidensorbitolverbindungen.

Die Formmasse zeichnet sich durch hohe Transparenz in Verbindung mit hoher Steifigkeit aus. Generell sind diese Formmassen in Form von gespritzten Formkörpern überall dort verwendbar, wo hohe Transparenz und Steifigkeit gefordert werden. Die Formmassen zeichnen sich darüberhinaus durch fehlenden Geruch und durch das Fehlen von Gelbfärbungen aus.

Ein besonders bevorzugtes Einsatzgebiet für die Formmassen ist der Dünnwandspritzguß.

Die folgenden Beispiele sollen die Erfindung näher erläutern:
- M_{w} =: Molmassengewichtsmittel (g/mol) ermittelt durch Gelpermeationschromatographie
- M_{w}/Mₙ =: Polydispersität, ermittelt durch Gelpermeationschromatographie
- II =: Isotaktischer Index (13C-NMR-Spektroskopie)
- nᵢₛₒ =: Mittlere isotaktische Blocklänge (¹³C-NMR-Sp.)
- n_{PE} =: Mittlere Blocklänge Polyethylen (¹³C-NMR-Sp.)
- VZ =: Viskositätszahl gemessen bei 135 °C, als 0,1 %ige Lösung in Decahydronaphthalin im Kapillarviskosimeter
- MFI(230/2,16) =: Schmelzindex bei 230 °C, 2,16 kg Belastung (DIN 53735)

Schmelzpunktbestimmung mit DSC (20 °C/min)
- Transparenz =: 80mm x 80 mm x 1 mm-Spritzplatten, Messung der durchgelassenen Lichtmenge im sichtbaren Bereich (T_{ger}, gerichtete Lichtdurchlässigkeit, im Folgenden als Transparenz bezeichnet)
- KDH =: Kugeldruckhärte (in Anlehnung an DIN 53456, 4 mm Formkörper, Zugstab Typ A nach ISO 3167, 240 °C Spritztemperatur)
- Zug-E-Modul =: Sekantenwert, nach DIN 53497-Z
- Izod-Schlagzähigkeit =: nach ISO 180/1C (bei 20 °C gemessen)
- Normgelbwert (NG) =: nach ASTM D 1925 - 77, DIN 6167 (Probenkörper: Spritzgußplatten 80 x 80 x 2,0 mm)
- Dichte =: Dichtebestimmung bei 23 °C nach DIN 53479, Verfahren A
- Kugelwärmedruckprüfung: nach IEC 335/1, Abschnitt 30.1
- Wärmeformbeständigkeit (Vicat A): nach ISO 306-1987 bzw. DIN 53460

Die für die Messungen benötigten normgemäßen Probekörper (Formkörper) werden auf einer Spritzgußmaschine Kraus Maffei KM 90/210 B hergestellt. Die Massetemperatur betrug 250±2°C. Die Fließfrontgeschwindigkeit betrug 300±20mm/s, die Werkzeugtemperatur war 30±3°C. Die Daten des Plastizierzylinders waren 30 mm Schneckendurchmesser, Schneckendrehzahl 420 Upm, Einspritzdruck 2222 bar und das rechnerische Schußvolumen bei 135 mm Hub betrug 95 cm³.

### A Polymerisation

Die Metallocenkatalysatoren wurden wie beispielsweise in DE-P 40 35 883.6 (= EP-Anmeldung Nr. 0 485 823 Al) beschrieben hergestellt. Die Polymerisationen orientieren sich an beispielsweise DE-P 40 35 886.0 (= EP-Anmeldung Nr. 0 485 822 A2), sie sollen jedoch nur beispielshaften Charakter haben. Die Formmasse kann, solange sie der Definition ihrer Eigenschaften genügt, mit jedem geeigneten Katalysatorsystem und jedem geeigneten Polymerisationsverfahren hergestellt werden.

### Beispiel 1

Ein trockener 150 dm³-Reaktor wurde mit Propylen gespült und bei 20 °C mit 80 dm³ eines Benzinschnittes mit dem Siedebereich 100 - 120 °C befüllt. Nach Zugabe von 50 l flüssigem Propylen wurden 64 cm³ Methylaluminoxanlösung (Lösung in Toluol, entsprechend 100 mmol Al) zugegeben. Der Reaktorinhalt wurde auf 40 °C gebracht und es wurde Wasserstoff zudosiert, bis im Gasraum des Reaktors ein Gehalt von 1,2 Vol.-% erreicht war. 19,8 mg rac-Dimethylsilylbis(2-methyl-1-indenyl)-zirkondichlorid wurden in 32 mol toluolischer Methylaluminoxanlösung (entsprechend 50 mmol Al) aufgelöst und in den Reaktor gegeben. Unter Konstanthaltung des Wasserstoffgehalts im Reaktor bei 1,2 ± 0,2 Vol.-% wurden bei 40 °C 18 h polymerisiert. Die Polymerisation wurde mit CO₂-Gas gestoppt und die Polymersuspension in einen nachgeschalteten Reaktor abgelassen. Das Suspensionsmedium wurde über eine Filterkerze und durch Wasserdampfdestillation vom Polymerpulver abgetrennt, und die wäßrige Polymersuspension über eine Druckfilternutsche vom Wasser getrennt. Bei 80 °C/100 mbar wurde das Pulver 24 h getrocknet. Ausbeute: 19,6 kg.

Am Pulver wurden folgende Daten gemessen:
MFI (230/2,16) = 32 g/10 min; VZ = 142 cm³/g;
M_{w} = 170 500 g/mol, M_{w}/Mₙ = 2,2;
Schmelzpunkt 151 °C, II = 97,2 %, nᵢₛₒ = 59.

### Beispiel 2

Beispiel 1 wurde wiederholt, es wurde jedoch eine Wasserstoffkonzentration von 1,8 ± 0,2 verwendet, die Metallocenmenge betrug 17,3 mg. Es wurden 17,9 kg Pulver erhalten.

Am Pulver wurden folgende Daten gemessen:
MFI (230/2,16) = 58 g/10 min; VZ = 114 cm³/g;
M_{w} = 126 000 g/mol, M_{w}/Mₙ = 2,1;
Schmelzpunkt 150 °C, II = 96,8 %, nᵢₛₒ = 53.

### Beispiel 3

Beispiel 2 wurde wiederholt, es wurden jedoch 250 g Ethylen verteilt über die gesamte Polymerisationszeit von 15 Stunden gleichmäßig zudosiert. Es wurden 18,5 kg Pulver erhalten.

Am Pulver wurden folgende Daten gemessen:
1,25 Gew.-% Ethylengehalt, n_{PE} < 1,2 (d. h.: die Mehrzahl der Ethyleneinheiten wurden isoliert eingebaut).

MFI (230/2,16) = 49 g/10 min; VZ = 131 cm³/g;
M_{w} = 139 000 g/mol, M_{w}/Mₙ = 2,4;
Schmelzpunkt 148 °C.

### Beispiel 4

Beispiel 2 wurde wiederholt, es wurden jedoch 9,8 mg des Metallocens rac-Dimethylsilylbis(2-methyl-4-phenyl-1-indenyl)-ZrCl₂ verwendet, die Polymerisationstemperatur war 50 °C und die verwendete Wasserstoffmenge war 2,95 ± 0,5 Vol.-%.
Es wurden 17,0 kg Polymerpulver erhalten.

Am Pulver wurden folgende Daten gemessen:
MFI (230/2,16) = 30 g/10 min; VZ = 147 cm³/g;
M_{w} = 189 500 g/mol, M_{w}/Mₙ = 2,0;
Schmelzpunkt 159 °C.

### Beispiel 5

Beispiel 3 wurde wiederholt, es wurden jedoch 750 g Ethylen verteilt über die gesamte Polymerisationszeit gleichmäßig zudosiert. Es wurden 19,5 kg Polymerpulver erhalten.

Am Pulver wurden folgende Daten gemessen:
3,2 Gew.-% Ethylengehalt, n_{PE} < 1,2 (d. h.: isolierter Einbau der meisten Ethylenmoleküle in der Polypropylenkette).

MFI (230/2,16) = 32 g/10 min; VZ = 156 cm³/g;
M_{w} = 194 000 g/mol, M_{w}/Mₙ = 2,2;
Schmelzpunkt 147 °C.

### Beispiel 6

Beispiel 4 wurde wiederholt, die verwendete Wasserstoffmenge war jedoch 2,3 ± 0,3 Vol.-%. Es wurden 16,9 kg Polymerpulver erhalten.

Am Pulver wurden folgende Daten gemessen:
MFI (230/2,16) = 19 g/10 min; VZ = 169 cm³/g;
M_{w} = 214 500 g/mol, M_{w}/Mₙ = 2,0;
Schmelzpunkt 160 °C.

### Beispiel 7

Ein trockener 24 dm³-Reaktor wurde mit Stickstoff gespült und mit 12 dm³ flüssigem Propylen befüllt.

Dann wurden 35 cm³ toluolische Methylaluminoxanlösung (entsprechend 52 mmol Al, mittlerer Oligonisierungsgrad n = 20) zugegeben und der Ansatz bei 30 °C 15 Minuten gerührt.

Parallel dazu wurden 4,0 mg rac-Dimethylsilylbis(2-methyl-1-indenyl)-zirkondichlorid in 13,5 cm³ toluolischer Methylaluminoxanlösung gelöst (20 mmol Al) und durch 15 minütiges Stehenlassen voraktiviert.

Die Lösung wurde dann in den Reaktor gegeben, durch Wärmezufuhr auf 78 °C aufgeheizt und das Polymerisationssystem 1 h durch Kühlung bei 78 °C gehalten. Gestoppt wurde die Polymerisation durch Abgasen der überschüssigen Monomeren. Trocknen des Pulvers bei 80 °C/200 mbar/24 h. Die Metallocenaktivität betrug 454 kg PP/g Metallocen x h.
VZ = 146 cm³/g; M_{w} = 142 000 g/mol, M_{w}/Mₙ = 2,3;
MFI (230/2,16) = 36 g/10 min;
Schmelzpunkt = 140 °C, nᵢₛₒ = 30.

### Beispiel 8

Ein trockener 150 dm³-Reaktor wurde mit Propylen gespült und bei 20°C mit 80 dm³ eines Benzinschnittes mit dem Siedebereich 100-120°C befüllt. Nach Zugabe von 50 l flüssigem Propylen wurden 64 cm³ Methylaluminoxanlösung (Lösung in Toluol, entsprechend 100 mmol Al) zugegeben. Der Reaktorinhalt wurde auf 40°C gebracht und es wurde Wasserstoff zudosiert, bis im Gasraum des Reaktors ein Gehalt von 0.7 Vol.-% erreicht war. 11,0 mg (0,02 mmol) rac-Dimethylsilylbis(2-methyl-1-indenyl) zirkondichlorid wurden in 32 mol toluolischer Methylaluminoxanlösung (entsprechend 50 mmol Al) aufgelöst und in den Reaktor gegeben. Unter Konstanthaltung des Wasserstoffgehalts im Reaktor bei 0,73 ± 0,1 Vol.-% wurden bei 40°C 24 h polymerisiert. Die Polymerisation wurde mit CO₂-Gas gestoppt und die Polymersuspension in einen nachgeschalteten Reaktor abgelassen. Das Suspensionsmedium wurde über eine Filterkerze und durch Wasserdampfdestillation vom Polymerpulver abgetrennt, und die wässrige Polymersuspension über eine Druckfilternutsche vom Wasser getrennt. Bei 80°C/100 mbar wurde das Pulver 24 h getrocknet. Ausbeute: 14,5 kg.

Am Pulver wurden folgende Daten gemessen:
MFI (230/5) = 4,8 g/10 min; VZ = 294 cm³/g;
M_{w} = 352^{.}000 g/mol, M_{w}/Mₙ = 2,3;
Schmelzpunkt 151°C, II = 97,0 %, nᵢₛₒ = 65.

### Beispiel 9

Beispiel 8 wurde wiederholt, es wurde jedoch kein Wasserstoff verwendet, die Metallocenmenge betrug 21,5 mg (0.04 mmol) und es wurde bei 30°C polymerisiert.
Es wurden 15,3 kg Pulver erhalten.
Am Pulver wurden folgende Daten gemessen:
MFI (230/5) = 3 g/10 min; VZ = 328 cm³/g;
M_{w} = 435^{.}000 g/mol, M_{w}/Mₙ = 2,2;
Schmelzpunkt = 155°C; II = 97,4 %, nᵢₛₒ = 78.

### Beispiel 10

Bei 20°C wurde analog zu Beispiel 8 ein Polypropylenpulver mit folgenden Eigenschaften hergestellt (Ausbeute 10,1 kg):
MFI (230/5) = 2,0 g/10 min; VZ = 385 cm³/g;
M_{w} = 485^{.}000 g/mol, M_{w}/Mₙ = 2,3;
Schmelzpunkt 157°C, II = 97,3 %, nᵢₛₒ = 70.

### Beispiel 11-13

Wie in Beispiel 8 wurden Polymerpulver hergestellt, die Wasserstoffmenge wurde dabei jedoch variiert:
0,4 ± 0,05 Vol.-% H₂ (Beispiel 11), 0,9 ± 0,1 Vol.-% H₂ (Beispiel 12) und 1,5 ± 0,3 Vol.-% H₂ (Beispiel 13).
Die Pulverausbeuten waren: 18,7 kg (Bsp. 11), 16,9 kg (Bsp. 12) und 20,6 kg (Bsp. 13).
In Tabelle 1 sind die Meßergebnisse an diesen Pulvern zusammengestellt.

**Tabelle 1**

| | Beispiel 11 | Beispiel 12 | Beispiel 13 |
|---|---|---|---|
| MFI (230/5) [g/10 min] | 18,5 | 32,0 | 109 |
| VZ [cm³/g] | 230 | 189 | 135 |
| M_{w} [g/mol] | 221000 | 200000 | 141000 |
| M_{w}/Mₙ | 2,0 | 2,0 | 2,0 |
| Schmelzpunkt [°C] | 152 | 152 | 152 |
| II [%] | 96,5 | 96,4 | 96,4 |
| nᵢₛₒ | 50 | 54 | 47 |

### Beispiele 14 und 15

Die Polymerisation von Beispiel 8 wurde mit folgenden Abwandlungen wiederholt. Als Metallocen wurde rac-Me₂Si Indenyl₂ HfCl₂ eingesetzt (vgl. EPA-0336127). Die Polymerisationen wurden bei 60°C mit 0,4 Vol.-% Wasserstoff (Beispiel 14) und bei 50°C mit 0,15 Vol.-% Wasserstoff (Beispiel 15) durchgeführt. An den Pulvern wurden die in Tabelle 2 zusammengefaßten Daten ermittelt:

**Tabelle 2**

| | Beispiel 14 | Beispiel 15 |
|---|---|---|
| MFI (230/5) [g/10 min] | 90 | 6 |
| VZ [cm³/g] | 141 | 250 |
| M_{w} [g/mol] | 152000 | 304000 |
| M_{w}/Mₙ | 2,1 | 2,2 |
| Schmelzpunkt [°C] | 137 | 140 |
| II [%] | 94,5 | 94,6 |
| nᵢₛₒ | 34 | 34 |

### Beispiel 16

Ein trockener 24 dm³-Reaktor wurde mit Stickstoff gespült und mit 12 dm³ flüssigem Propylen befüllt.

Dann wurden 35 cm³ toluolische Methylaluminoxanlösung (entsprechend 52 mmol Al, mittlerer Oligonisierungsgrad n = 17) zugegeben und der Ansatz bei 30°C 15 Minuten gerührt.
Parallel dazu wurden 2,4 mg (0,005 mmol) rac-Dimethylsilylbis(2-methyl-1-indenyl) zirkondichlorid in 13,5 cm³ toluolischer Methylaluminoxanlösung gelöst (20 mmol Al) und durch 15 minütiges Stehenlassen voraktiviert.

Die Lösung wurde dann in den Reaktor gegeben, durch Wärmezufuhr auf 50°C aufgeheizt und das Polymerisationssystem 3 h durch Kühlung bei 50°C gehalten. Gestoppt wurde die Polymerisation durch Abgasen der überschüssigen Monomeren. Trocknen des Pulvers bei 80°C/200 mbar/24 h. Die Metallocenaktivtät betrug 89 kg PP/g Metallocen xh.
VZ = 259 cm³/g; M_{w} = 342500 g/mol, M_{w}/Mₙ = 2,1;
II = 96,8 %; MFI (230/5) = 8,1 g/10min;
Schmelzpunkt = 150°C

### Beispiel 17

Beispiel 16 wurde mit 11,0 mg (0,02 mmol) des Metallocens rac-Phenyl(methyl)silylbis(2-methyl-1-indenyl) zirkondichlorid wiederholt, das mit einer Metallocenaktivität von 95,5 kgPP/g Metallocen x h erhaltene Pulver wies folgende Eigenschaften auf:
VZ = 347 cm³/g; M_{w} = 444^{.}000 g/mol, M_{w}/Mₙ = 2,5;
MFI (230/5) = 5,2 g/10 min; Schmelzpunkt = 149°C;
II = 96,0 %.
B Formmassen und Formkörper (Anwendungsbeispiele)

### Beispiel 18

Verwendet wurde das Polymerpulver aus Beispiel 1, das mit 0,07 Gew.-% Penta-erithrityltetrakis[3-(3,5-di-t-butyl-4-hydroxyphenyl)propionat], 0,07 Gew.-% Tris(2,4-di-t-butylphenyl)phosphit, 0,1 Gew.-% einer Mischung aus 90 % Glycerinmonostearat und 10 % Glycerindistearat (GMS, Atmer 129) und 0,25 Gew.-% Methyldibenzylidensorbitol (MDBS, Millad 3940) als Zusatzstoffe zur Verbesserung der Oxidationsbeständigkeit, der Gleiteigenschaften und Entformbarkeit und als Nukleierungsmittel, vermischt wurde und mit einem Doppelschneckenextruder ZSK 28 der Fa. Werner und Pfleiderer granuliert wurde. Die Temperaturen in den fünf Heizzonen des Extruders waren dabei 150 °C (Einzug), 210 °C, 260 °C, 280 °C und 260 °C (Düsenplatte). Die Massetemperatur betrug 260 °C, die Extruderschnecken wurde mit 280 Upm. betrieben. Es wurde ein farbloses wasserklares Granulat erhalten. Zur Messung der mechanischen und optischen Daten wurden normgemäße Formkörper im Spritzgußverfahren hergestellt.

An diesen Formkörpern wurden folgende charakteristische Daten ermittelt:
MFI (230/2,16) = 35 g/10 min; Transparenz 65 %; KDH (358 N) = 75 Nmm⁻²; Zug-E-Modul (Sekante) 1610 Nmm⁻², Izod Schlagzähigkeit 58 mJmm⁻²; NG = 5,5. Die Verarbeitbarkeit der Formmasse wurde durch Dünnwandspritzguß (Becherspritzguß) durch Spritzen von 175 ml-Bechern mit einer Wandstärke von 0,5 mm an einer Spritzgußmaschine Netstal 110/45 geprüft. Kriterien waren das Entformungsverhalten, sowie die erreichbare Zykluszeit ohne Störungen während eines Dauerlaufes von 3 h bei maximaler Geschwindigkeit. Die Verarbeitungstemperatur war 230 °C, der störungsfrei erreichbare Zyklus war 32 Schuß/min (Zykluszeit 1,9 sec). Die hergestellten Becher waren klar, transparent und ohne Geruch.

### Beispiel 19

Es wurde verfahren wie in Beispiel 18, statt 0,25 Gew.-% Methyldibenzylidensorbitol wurden jedoch 0,3 Gew.-% Talkum ultrafein als Nukleierungsmittel eingesetzt.

An den Formkörpern wurden folgende Daten ermittelt:
Dichte = 0,904 g/cm³; MFI (230/2,16) = 33 g/10 min; Transparenz 41 %; KDH (358 N) = 71 Nmm⁻²; Zug-E-Modul (Sekante) 1430 Nmm⁻²; Izod Schlagzähigkeit 52 mJmm⁻²; NG = 6,5.

Der Becherspritzgußversuch analog zu Beispiel 18 ergab eine Zykluszeit von 2,1 sec.

### Beispiel 20

Es wurde verfahren wie in Beispiel 18, es wurde jedoch kein Glycerinstearat und kein Sorbitol verwendet.

An den Formkörpern wurden folgende Daten ermittelt:
Dichte = 0,901 g/cm³; MFI (230/2,16) = 33 g/10 min; Transparenz 35 %; KDH (358 N) = 69 Nmm⁻²; Zug-E-Modul (Sekante) 1430 Nmm⁻²; Izod Schlagzähigkeit 68 mJmm⁻²; NG = 6,5.

Der Becherspritzgußversuch analog zu Beispiel 18 ergab eine Zykluszeit von 2,3 sec.

### Vergleichsbeispiel 1

Beispiel 18 wurde mit einem Polypropylen für Spritzgußanwendungen (Hostalen PPV 1770 S3A) wiederholt, das mit einem konventionellen Ziegler-Natta-Katalysator (TiCl₄/MgCl₂/Phtalsäurediethylester) hergestellt wurde. Das Polymer hatte einen etherextrahierbaren Anteil von 4,2 % ataktischem Polypropylen. Die isotaktische Blocklänge des Rückstandes war 150, M_{w}/Mₙ = 3,6 und der Schmelzpunkt = 164°C. An den aus diesem Polymer hergestellten Formkörpern wurden folgende Daten gemessen:
Dichte = 0,902 g/cm³; MFI (230/2,16) = 27 g/10 min; Transparenz 23 %; KDH (358 N) = 64 Nmm⁻²; Zug-E-Modul (Sekante) 1200 Nmm⁻²; Izod Schlagzähigkeit 65 mJmm⁻²; NG = 8,5.

Der Becherspritzgußversuch analog zu Beispiel 18 ergab eine Zykluszeit von 2,5 sec.

Verglichen mit den aus der Formmasse der Beispiele 1 bis 3 hergestellten Formkörpern zeigten die Formkörper des Vergleichsbeispiels deutlich geringere Steifigkeit (KDH, Zug-E-Modul), eine geringere Transparenz und eine stärkere Gelbfärbung (NG-Wert).

Bei der Verarbeitung zu Bechern war die Zykluszeit länger, die hergestellten Becher ware deutlich weniger transparent und wiesen den für CR-Produkte typischen Geruch auf.

### Beispiel 21

### Beispiel 18 wurde mit dem Polymer aus Beispiel 2 wiederholt.

An den Formkörpern wurden folgende Daten ermittelt:
MFI (230/2,16) = 53 g/10 min; Transparenz 65 %; KDH (358 N) = 65 Nmm⁻²; Zug-E-Modul (Sekante) 1600 Nmm⁻²; Izod Schlagzähigkeit 40 mJmm⁻²; NG = 5,2.

Der Becherspritzgußversuch analog zu Beispiel 18, jedoch bei einer Verarbeitungstemperatur von 220 °C, ergab eine Zykluszeit von 1,7 sec. Die hergestellten Becher waren transparent, wasserklar und ohne Geruch.

### Beispiel 22

Beispiel 19 wurde wiederholt, als Polymer wurde jedoch das in Beispiel 2 beschriebene Polypropylen verwendet.

An den Formkörpern wurden folgende Daten ermittelt:
MFI (230/2,16) = 56 g/10 min; Dichte = 0,906 g/cm³; Transparenz 40 %; KDH (358 N) = 75 Nmm⁻²; Zug-E-Modul (Sekante) 1550 Nmm⁻²; Izod Schlagzähigkeit 46 mJmm⁻²; NG = 5,3.

Der Becherspritzgußversuch analog zu Beispiel 18, jedoch bei einer Verarbeitungstemperatur von 220 °C, ergab eine Zykluszeit von 1,6 sec.

### Vergleichsbeispiel 2

Beispiel 22 wurde mit einem Polypropylen für Spritzgußanwendungen (Hostalen PPW 1780 S2A) wiederholt, das mit einem konventionellen Ziegler-Natta-Katalysator (TiCl₄/MgCl₂/Phtalsäurediethylester) hergestellt wurde.

An diesem Polymeren wurden folgende Daten gemessen:
3,7 Gew.-% ataktisches Polypropylen (Etherextraktion); MFI (230/2,16) = 54 g/10min; VZ = 140 cm³/g; M_{w} = 161 000 g/mol, M_{w}/Mₙ = 3,8; Schmelzpunkt 162 °C.

An den aus dieser nicht erfindungsgemäßen Formmasse hergestellten Formkörpern wurde folgende Daten gemessen:
Dichte = 0,907 g/cm³; MFI (230/2,16) = 51 g/10 min; Transparenz 30 %; KDH (358 N) = 75 Nmm⁻²; Zug-E-Modul (Sekante) 1400 Nmm⁻²; Izod Schlagzähigkeit 45 mJmm⁻²; NG = 8,0.

Der Becherspritzgußversuch analog zu Beispiel 22 ergab eine längere Zykluszeit von 2,0 sec, die hergestellten Becher waren deutlich weniger transparent und wiesen den für CR-Produkte typischen Geruch auf.

### Beispiel 23

Beispiel 18 wurde wiederholt, es wurde jedoch das Polymer aus Beispiel 3 verwendet. An den Formkörpern wurden folgende Daten gemessen:
MFI (230/2,16) = 48 g/10 min; Transparenz 70 %; KDH (358 N) = 72 Nmm⁻²; Zug-E-Modul (Sekante) 1500 Nmm⁻²; Izod Schlagzähigkeit 95 mJmm⁻²; NG = 6,0.

Der Becherspritzgußversuch analog zu Beispiel 18 ergab eine Zykluszeit von 1,7 sec, die hergestellten Becher waren von excellenter Transparenz und wiesen keinen Geruch auf.

### Beispiel 24

Beispiel 18 wurde wiederholt, es wurde jedoch das Polymer von Beispiel 4 verwendet. An den Formkörpern wurden folgende Daten gemessen:
Dichte = 0,908 g/cm³; MFI (230/2,16) = 32 g/10 0 min; Transparenz 42 %; KDH (358 N) = 84 Nmm⁻²; Zug-E-Modul (Sekante) 1700 Nmm⁻²; NG = 5,8.

Der Becherspritzgußversuch ergab eine Zykluszeit von 1,4 sec.

### Beispiel 25

Beispiel 18 wurde wiederholt, es wurde jedoch das Polymer von Beispiel 5 verwendet. An den Formkörpern wurden folgende Daten gemessen:
MFI (230/2,16) = 35 g/10 min; Transparenz 80 %; KDH (358 N) = 68 Nmm⁻²; Zug-E-Modul (Sekante) 1550 Nmm⁻²; Izod Schlagzähigkeit: ohne Bruch; NG = 6,0.

Der Becherspritzgußversuch ergab eine Zykluszeit von 1,7 sec.

### Beispiel 26

Beispiel 18 wurde wiederholt, es wurde jedoch das Polymer von Beispiel 6 verwendet. An den Formkörpern wurden folgende Daten gemessen:
MFI (230/2,16) = 18 g/10 min; Transparenz 50 %; Dichte 0,907 g/cm³; KDH (358 N) = 80 Nmm⁻²; Zug-E-Modul (Sekante) 1650 Nmm⁻²; NG = 5,5.

Der Becherspritzgußversuch ergab eine Zykluszeit von 1,4 sec.

### Beispiel 27

Beispiel 18 wurde wiederholt, es wurde jedoch das Polymer von Beispiel 5 verwendet. An den Formkörpern wurden folgende Daten ermittelt:
MFI (230/2,16) = 35 g/10 min; Transparenz 70 %; KDH (358 N) = 66 Nmm⁻²; Zug-E-Modul (Sekante) 1350 Nmm⁻²; Izod-Schlagzähigkeit 85 mJmm⁻²; NG = 6,0.

Im Becherspritzgußversuch wurden Becher mit excellenter Transparenz und ohne Geruch erhalten.

### Beispiel 28

Verwendet wurde das Polymerpulver aus Beispiel 8. Zur Messung der mechanischen und optischen Daten wurden normgemäße Formkörper (Spritzkörper, für die Messung der KDH auch 4 mm Preßplatten) hergestellt. Zu diesem Zweck wurde das Polymerpulver mit 0,3 Gew.-% Pentaerithrityltetrakis[3-(3,5-di-t-butyl-4 hydroxy-phenyl)propionat] und 0,05 Gew.-% Calziumstearat innig gemischt und mit einem Doppelschneckenextruder ZSK 28 der Fa. Werner und Pfleiderer aufgeschmolzen, homogenisiert und granuliert. Die Temperaturen in den fünf Heizzonen des Extruders waren dabei 150°C (Einzug), 200°C, 270°C, 280°C und 255°C (Düsenplatte). Die Massetemperatur betrug 255°C, die Extruderschnecken wurden mit 300 Upm betrieben. Es wurde ein farbloses Granulat erhalten.

An den aus dieser Formmasse hergestellten Formkörpern bzw. an dieser Formmasse selbst wurden folgende Daten ermittelt:
MFI (230/5) = 5,2 g/10 min; VZ = 283 cm³/g;
M_{w} = 346000 g/mol, M_{w}/Mₙ = 2,2;
Schmelzpunkt = 152°C, II = 97,0 %; nᵢₛₒ = 65.
Transparenz: 48 %; Vicat A = 147°C;
Kugelwärmedruckprüfung 1,5 mm bei 110°C;
Zug-E-Modul = 1376 Nmm⁻²; KDH = 74 Nmm⁻²;
KDH am Spritzkörper nach DIN 53456, 358 N:
76 Nmm⁻²)

### Vergleichsversuch 3

An aus nicht erfindungsgemäßen Formmassen (statistisches Copolymer Hostalen PPU 5736 S 2G der Hoechst AG, Frankfurt, BRD (Ethylen/Propylen-Copolymer) mit 2,3% Ethylengehalt) hergestellten Formkörpern werden die gleichen Messungen durchgeführt.
MFI (230/5) = 56 g/10 min; VZ = 183cm³/g;
M_{w} = 251000 g/mol, M_{w}/Mₙ = 3.8; Schmelzpunkt = 157°C.
Die Transparenz betrug 50 %, der Vicat A-Wert war 140°C.
Zug-E-Modul = 1100 Nmm⁻², Kugeldruckhärte KDH = 60 Nmm⁻².

Das Vergleichsbeispiel zeigt, daß ein aus statistischen Copolymeren hergestellter Formkörper bei gleicher Transparenz eine deutlich geringere Wärmeformbeständigkeit, sowie reduzierte Härte und Steifigkeit aufweist als die erfindungsgemäßen Formkörper aus Beispiel 28.

### Beispiel 29

Verwendet wurde das Polymerpulver aus Beispiel 9. Zur Herstellung der Formmasse analog Beispiel 28 waren die Temperaturen im Extruder 150°C (Einzug), 200°C, 250°C, 250°C und 255°C (Düsenplatte), die Massetemperatur war 260°C, die Extruderschnecken wurden mit 200 Upm betrieben. Es wurde ein farbloses Granulat erhalten.
Ergebnisse der Austestung:
MFI (230/5) = 2,6 g/10 min; VZ = 340 cm³/g;
M_{w} = 448^{.}000 g/mol, M_{w}/Mₙ = 2.2;
Schmelzpunkt = 156°C; II = 96,8 %, nᵢₛₒ = 65.
Transparenz: 54 %; Vicat A = 151°C;
Kugelwärmedruckprüfung 1,5 mm bei 115°C;
Zug-E-Modul = 1509 Nmm⁻²; KDH = 79 Nmm⁻².

### Vergleichsversuch 4

In gleicher Weise wurde eine handelsübliche Polypropylen (Hostalen PPN 1060 der Hoechst AG, Frankfurt, BRD) Formmasse untersucht:
MFI (230/5) = 8 g/10 min; VZ = 290 cm³/g; nᵢₛₒ = 109;
M_{w} = 280^{.}000 g/mol, M_{w}/Mₙ = 6,0; Schmelzpunkt = 164°C.

Mechanische und optische Daten des aus Hostalen PPN 1060 hergestellten Formkörpers:
Transparenz: 24 %; Vicat A = 152°C;
Zug-E-Modul = 1300 Nmm⁻²; KDH = 80 Nmm⁻²

Der Vergleichsversuch zeigt, daß bei ansonsten vergleichbaren mechanischen Daten und bei vergleichbarer Wärmeformbeständigkeit die Transparenz der erfindungsgemäßen Formkörper aus Beispiel 29 bei weitem nicht erreicht wird.

### Beispiel 30

Verwendet wurde das Polypropylenpulver aus Beispiel 10, die Formmasse wurde analog zu Beispiel 28 hergestellt, die Temperaturen im Extruder waren 135°C (Einzug), 175°C, 290°C, 280°C und 250°C (Düsenplatte), die Massetemperatur war 280°C, und die Extruderschnecken wurden mit 300 Upm. betrieben.
MFI (230/5) = 1,8 g/10 min; VZ = 385 cm³/g;
M_{w} = 471^{.}000 g/mol, M_{w}/Mₙ = 2,7;
Schmelzpunkt = 156°C; II = 97,4 %, nᵢₛₒ = 70;
Transparenz = 56 %; Vicat A = 152°C;
Kugelwärmedruckprüfung 1,7 mm bei 100°C;
Zug-E-Modul = 1561 Nmm⁻²; KDH = 79 Nmm⁻².

Die aus der Formmasse hergestellten Formkörper vereinigen hohe Transparenz mit hoher Wärmeformbeständigkeit, Härte und Steifigkeit.

### Beispiele 31-33

Verwendet wurden die Polypropylenpulver aus den Beispielen 11 (Beisp. 31), 12 (Beisp. 32) und 13 (Beisp. 33).
Aus den Polymerpulvern wurden durch Extrusion die erfindungsgemäßen Formkörper hergestellt (analog zu Beispiel 28)
Der Extruder wurde in folgender Weise betrieben:

| | Upm der Schnecken | Temperaturen [°C] | | | | | Masse |
|---|---|---|---|---|---|---|---|
| | | Zone 1 (Einzug) | Zone 2 | Zone 3 | Zone 4 | Zone 5 (Düsenplatte) | |
| Beisp. 31 | 300 | 150 | 185 | 250 | 250 | 230 | 240 |
| Beisp. 32 | 300 | 130 | 155 | 200 | 175 | 175 | 185 |
| Beisp. 33 | 300 | 110 | 145 | 185 | 175 | 160 | 180 |

Die Meßergebnisse an den Granulaten und Formkörpern sind in Tabelle 3 zusammengestellt.

**Tabelle 3**

| | Beisp. 31 | Beisp. 32 | Beisp.33 |
|---|---|---|---|
| MFI (230/5) [g/10 min] | 17,2 | 36,7 | 114 |
| VZ [cm³/g] | 213 | 179 | 125 |
| M_{w} [g/mol] | 235500 | 194500 | 135000 |
| M_{w}/Mₙ | 2,0 | 2,0 | 1,9 |
| Schmelzpunkt [°C] | 152 | 152 | 151 |
| II [%] | 96,5 | 96,5 | 96,3 |
| nᵢₛₒ | 49 | 52 | 45 |
| Transparenz [%] | 55 | 46 | 53 |
| Vicat A [°C] | 147 | 145 | 142 |
| Kugelwärmedruckprüfung [mm/bei 110 °C] | 1,5 | 1,6 | 1,6 |
| Zug-E-Modul [Nmm⁻²] | 1370 | 1400 | 1400 |
| KDH [Nmm⁻²] | 77 | 80 | 82 |

### Beispiel 34 und 35

Verwendet wurden die Polymerpulver der Beispiele 14 (Beispiel 34) und 15 (Beispiel 35). Analog zu Beispiel 28 wurden durch Extrusion die Formkörpern hergestellt.
Der Extruder wurde in folgender Weise betrieben:

| | Upm der Schnecken | Temperaturen [°C] | | | | | Masse |
|---|---|---|---|---|---|---|---|
| | | Zone 1 (Einzug) | Zone 2 | Zone 3 | Zone 4 | Zone 5 (Düsenplatte) | |
| Beisp. 34 | 300 | 130 | 165 | 190 | 180 | 155 | 190 |
| Beisp. 35 | 165 | 150 | 210 | 250 | 250 | 240 | 240 |

Die Meßergebnisse an den Granulaten und Formkörpern sind in Tabelle 4 zusammengestellt.

**Tabelle 4**

| | Beisp. 34 | Beisp. 35 |
|---|---|---|
| MFI (230/5) [g/10 min] | 93 | 5,8 |
| VZ [cm³/g] | 132 | 255 |
| M_{w} [g/mol] | 146^{.}000 | 315^{.}000 |
| M_{w}/Mₙ | 2,2 | 2,3 |
| Schmelzpunkt [°C] | 138 | 139 |
| II [%] | 94,5 | 95,0 |
| nᵢₛₒ | 35 | 39 |
| Transparenz [%] | 65 | 64 |
| Vicat A [°C] | 131 | 132 |
| Kugelwärmedruckprüfung [mm/bei 100 °C] | 1,7 | 1,7 |
| Zug-E-Modul [Nmm⁻²] | 1260 | 1200 |
| KDH [Nmm⁻²] | 71 | 68 |

### Beispiel 36

Durch Extrusion wurden aus dem Polymerpulver des Beispiels 16 analog zu Beispiel 28 Formkörper hergestellt. Die Bedingungen im Extruder waren: 150°C (Einzug), 200°C, 260°C, 270°C und 250°C (Düsenplatte), Massetemperatur 260°C, 300 Upm Schneckendrehzahl.
An der Formmasse und an den Formkörpern wurde folgendes gemessen:
MFi (230/5) = 6,8 g/10 min; VZ = 264 cm³/g;
M_{w} = 328^{.}000 g/mol, M_{w}/Mₙ = 2,1;
Schmelzpunkt = 152°C, II = 96,8 %, nᵢₛₒ = 61;
Transparenz = 44 %; Kugelwärmedruckprüfung 1,5 mm bei 110°C;
Vicat A = 145°C; KDH = 74 Nmm⁻²; Zug-E-Modul = 1422 Nmm⁻².

### Beispiel 37

Es wurde verfahren wie in Beispiel 36, verwendet wurde jedoch das Polymerpulver aus Beispiel 17.
MFI (230/5) = 4,1 g/10 min; VZ = 293 cm³/g;
M_{w} = 369000 g/mol, M_{w}/Mₙ = 2,0; Schmelzpunkt = 151°C;
II = 96,4 %, nᵢₛₒ = 60; Transparenz = 51 %,
Kugelwärmedruckprüfung = 1,5 mm bei 110°C;
Vicat A = 149°C; KDH = 75 Nmm⁻²;
Zug-E-Modul = 1439 Nmm⁻².

### Beispiel 38

a) Herstellung des Polymeren:
   Ein trockener 150 dm³-Reaktor wurde mit Stickstoff und Propylen gespült und bei 20°C mit 80 dm³ eines entaromatisierten Benzinschnittes mit dem Siedebereich 100-120°C gefüllt. Nach Zugabe von 50 l flüssigem Propylen wurden 64 cm³ toluolische Methylaluminiumoxanlösung (entsprechend 100 mmol Al) zugegeben. Der Reaktorinhalt wurde auf 50°C gebracht und es wurde Wasserstoff zudosiert, bis im Gasraum des Reaktors ein Gehalt von 2,9 Vol.-% erreicht war. 10,6 mg rac-Dimethylsilylbis(2-methyl-4-phenyl-1-indenyl) Zirkondichlorid wurden in 16 ml toluolischer Methylaluminiumoxanlösung (25 mmol Al) aufgelöst und in den Reaktor gegeben. Unter Konstanthaltung des Wasserstoffgehalts im Gasraum des Reaktors bei 2,9 ± 0,1 Vol.-% wurde bei 50°C bis zu einem Restdruck von 1 bar Propylen polymerisiert. Die Polymerisationsreaktrion wurde mit CO₂-Gas gestoppft und die Polymersuspension in einem nachgeschalteten Reaktor abgelassen. Das Suspensionsmedium wurde über eine Filterherze und durch Wasserdampfdestillation von Polymerpulver abgetrennt und die wässrige Polymersuspension über eine Druckfilternutsche vom Wasser getrennt. Bei 80°C/100 mbar wurde das Pulver 24 h getrocknet.
   Ausbeute 20,8 kg
   MFI (230/5) = 37 g/10 min; VZ = 182 cm³/g; M_{w} = 197500 g/mol,
   M_{w}/Mₙ = 2,4; Schmelzpunkt = 160°C; II = 98,8 %, nᵢₛₒ = 100.
b) Herstellung der Formmasse
   Die Formmasse wurde analog zu Beispiel 28 hergestellt. Die Temperaturen im Extruder waren 150°C (Einzug), 200°C, 290°C, 280°C und 260°C (Düsenplatte), die Massetemperatur war 275°C, die Extruderschnecken wurden mit 250 Upm. betrieben. An den aus der Formmasse hergestellten Formkörpern wurden folgende Daten ermittelt.
   MFI (230/5) = 35 g/10 min, VZ = 185 cm³/g; M_{w} = 200500 g/mol, M_{w}/Mₙ = 2,4; Schmelzpunkt = 160°C; Transparenz = 54 %; Vicat A = 156°C; Kugelwäredruckprüfung 1,8 mm bei 100°C; Zug-E-Model = 1640 Nmm⁻²; KDH = 84 Nmm⁻².

Die aus der Formmasse hergestellten Formkörper zeichnen sich durch hohe Transparenz, Wärmeformbeständigkeit, Härte und Steifigkeit aus.

### Beispiel 39

a) Herstellung des Cokatalysator/Metallocen-Systems
   aa) Herstellung des geträgerten Cokatalysators:
      Die Herstellung des geträgerten Cokatalysators erfolgte wie in EP 92 107 331.8 beschrieben in der folgenden Weise in einem Edelstahl-Reaktor in explosionsgeschützter Ausführungen mit einem Umpumpsystem der Druckstufe 60 bar, mit Inertgasversorgung, Temperierung durch Mantelkühlung und zweitem Kühlkreislauf über einem Wärmetauscher am Umpumpsystem. Das Umpumpsystem saugte den Reaktorinhalt über einen Anschluß im Reaktorboden mit einer Pumpe an drückte ihn in einen Mischer und durch eine Steigleitung über einen Wärmetauscher in den Reaktor zurück. Der Mischer war so geschaltet, daß sich in dem Zulauf ein verengter Rohrquerschnitt befand, wo eine erhöhte Strömungsgeschwindigkeit entstand, und in dessen Turbulenzzone axial und entgegen der Strömungsrichtung eine dünne Zuleitung geführt war, durch welche -getaktet- jeweils eine definierte Menge Wasser unter 40 bar Argon eingespeist werden konnte. Die Kontrolle der Reaktion erfolgte über einen Probennehmer am Umpumpkreislauf.
      Im vorstehend beschriebenen Reaktor mit 16 dm³ Volumen wurden 5 dm³ Decan unter Inertbedingungen vorgelegt. 0,3 dm³ (= 3,1 mol) Trimethylaluminium wurden bei 25°C zugefügt. Danach wurden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 45.9 g Wasser wurde in Portionen von 0,1 cm³ während 2 h jeweils alle 15 s in den Reaktor gegeben. Der Druck, herrührend von Argon und den entwickelten Gasen, wurde durch Druckregelventile konstant bei 10 bar gehalten. Nachdem alles Wasser eingebracht worden war, wurde das Umpumpsystem abgeschaltet und das Rühren noch 5 h bei 25°C fortgesetzt. Über eine Drucknutsche wurde das Lösungsmittel entfernt und der Cokatalysatorfeststoff mit Decan gewaschen. Dann wurde im Vakuum getrocknet.
   ab) Umsetzung des Cokatalysators mit dem Metallocen rac-Dimethylsilandiylbis(2-methyl-4-phenyl-1-indenyl)ZrCl₂
      1,5 g des unter aa) hergestellten Feststoffs (106 mmol Al) wurden in einem rührbaren Gefäß in 100 cm³ Toluol suspensiert und auf -30°C abgekühlt. Gleichzeichtig wurden 155 mg (0,246 mmol) rac-dimethylsilandiylbis(2-methyl-4-phenyl-idenyl)zirkon-dichlorid in 75 cm³ Toluol gelöst und innerhalb von 30 Minuten zur Suspension zugetropft. Es wurde langsam unter Rühren auf Raumtemperatur erwärmt, wobei die Suspension eine rote Farbe annahm.
      Anschließend wurde eine Stunde bei 80°C gerührt und nach dem Abkühlen auf Raumtemperatur wurde das Gemisch filtriert und der Feststoff 3 x mit je 100 cm³ Toluol und 1 x mit 100 cm³ Hexan gewaschen.
      Der verbleibende, hexanfeuchte Filterrückstand wurde im Vakuum getrocknet. Man erhielt 12,9 g frei fließenden, hellroten, geträgerten Katalysator. Die Analyse ergab einen Gehalt von 10,1 mg Zirkonocen pro Gramm Katalysator.
b) Polymerisation
   2,8 g des unter ab) hergestellten Katalysators wurden in 50 cm³ eines entaromatisierten Benzinschnittes mit dem Siedebereich 100-120°C suspendiert.
   Parallel dazu wurde ein trockener 75-dm³-Reaktor zunächst mit Stickstoff und anschließend mit Propylen gespült mit 7,5 Ndm³ Wasserstoff und mit 40 dm³ flüssigem Propylen befüllt. Dann wurden 12 cm³ Triisobutylaluminium (48 mmol) mit 100 ml Hexan verdünnt, in den Reaktor gegeben und der Ansatz bei 30°C 15 Minuten gerührt.
   Anschließend wurde die Katalysator-Suspension in den Reaktor gegeben, auf die Polymerisationstemperatur von 70°C aufgeheizt (10°C/min) und das Polymerisationssystem 1 h durch Kühlung bei 70°C gehalten.
   Gestoppt wurde die Polymerisation durch Zusatz von 50 ml Isopropanol. Das überschüssige Monomer wurde abgegast, das Polymer im Vakuum getrocknet.
   Es resultierten 5,0 kg Polypropylen-Pulver.
   Am Pulver wurden folgende Daten ermittelt:
   MFI (230/5) = 6,1 g/109 min; VZ = 305 cm³/g; M_{w} = 382000 g/mol,
   M_{w}/Mₙ = 2,2; Schmelzpunkt = 150°C.
c) Herstellung der Formmasse
   Die Formmasse wurde analog zu Beispiel 28 hergestellt. Die Temperaturen im Extruder waren 150°C (Einzug), 200°C, 250°C, 280°C und 270°C (Düsenplatte), die Massetemperatur war 270°C, 240 Upm Schneckendrehzahl.
   An der Formmasse und an den Formkörpern wurde folgendes gemessen:
   MFI (230/5) = 6,5 g/10 min; VZ = 285 cm³/g; M_{w} = 379000 g/mol; M_{w}/Mₙ = 2,2; Schmelzpunkt = 151°C.
   Transparenz 45 %, Kugelwärmedruckprüfung 1,4 mm bei 110°C; Vicat A = 147°C; KDH = 79 Nmm⁻²; Zug-E-Modul = 1487 Nmm⁻².

## Patentansprüche

1. Verwendung einer Polyolefinformmasse zur Herstellung von Spritzguß-Formkörpern im wesentlichen bestehend aus einem Polyolefin, welches sich von einem Olefin mit mindestens 3 C-Atomen der Formel R^{a}-CH = CH-R^{b} ableitet, worin R^{a} und R^{b} gleich oder verschieden sind und Wasserstoff oder C₁-C₁₅-Alkyl, geradkettig oder verzweigt, bedeuten oder R^{a} und R^{b} mit den sie verbindenden Atomen einen Ring bilden, wobei die Polyolefinformmasse bis zu 10 Gew.-% Ethylen oder ein zweites Olefin mit obengenannter Bedeutung als Comonomer enthalten kann, mit einer Molmasse M_{w} > 80 000 g/mol, einer Polydispersität M_{w}/Mₙ von 1,8 bis 3,5, einer Viskositätszahl > 70 cm³/g, einem Schmelzpunkt von 130 bis 160 °C, einer isotaktischen Blocklänge von 30 - 100, einer gerichteten Transparenz > 30 % und einem etherextrahierbaren Anteil kleiner als 2 Gew.-%.

2. Verwendung einer Polyolefinformmasse nach Anspruch 1 mit einer Molmasse M_{w} >100 000 g/mol, einer Polydispersität M_{w}/Mₙ von 2,0 bis 3,0, einer Viskositätszahl > 100 cm³/g und einem Schmelzpunkt von 140 bis 160 °C.

3. Verwendung einer Polyolefinformmasse nach Anspruch 1 oder 2, wobei die Polyolefinformmasse bis zu 10 Gew.-%, eines zweiten Olefins mit oben genannter Bedeutung oder bis zu 10 Gew.-% Ethylen enthält.

4. Verwendung einer Polyolefinformmasse nach einem oder mehreren der Ansprüche 1 bis 3, wobei das Polyolefin Polypropylen ist.

5. Verwendung einer Polyolefinformmasse nach einem oder mehreren der Ansprüche 1 bis 4, wobei sie zusätzlich Nukleierungsmittel, Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika oder Treibmittel enthält.

6. Verwendung einer Polyolefinformmasse nach einem oder mehreren der Ansprüche 1 bis 5, wobei als Nukleierungsmittel feingemahlener Talkum, Natriumbenzoat oder Sorbitolderivate verwendet werden.

## Claims

1. The use, for the production of injection moldings, of a polyolefin molding composition essentially comprising a polyolefin derived from an olefin, having at least 3 carbon atoms, of the formula R^{a}-CH=CH-R^{b}, in which R^{a} and R^{b} are identical or different and are hydrogen or C₁-C₁₅-alkyl, straight-chain or branched, or R^{a} and R^{b}, together with the atoms connecting them, form a ring, where the polyolefin molding composition may contain up to 10% by weight of ethylene or a second olefin as defined above as comonomer, having a molecular weight M_{w} of > 80,000 g/mol, a polydispersity M_{w}/Mₙ of from 1.8 to 3.5, a viscosity of > 70 cm³/g, a melting point of from 130 to 160°C, an isotactic block length of from 30 to 100, an aligned transparency of > 30% and an ether-extractable content of less than 2% by weight.

2. The use of a polyolefin molding composition as claimed in claim 1 having a molecular weight M_{w} of > 100,000 g/mol, a polydispersity M_{w}/Mₙ of from 2.0 to 3.0, a viscosity index of > 100 cm³/g and a melting point of from 140 to 160°C.

3. The use of a polyolefin molding composition as claimed in claim 1 or 2, where the polyolefin molding composition contains up to 10% by weight of a second olefin as defined above or up to 10% by weight of ethylene.

4. The use of a polyolefin molding composition as claimed in one or more of claims 1 to 3, where the polyolefin is polypropylene.

5. The use of a polyolefin molding composition as claimed in one or more of claims 1 to 4, which additionally contains nucleating agents, stabilizers, antioxidants, UV absorbers, light stabilizers, metal deactivators, free-radical scavengers, fillers and reinforcing agents, compatibilizers, plasticizers, lubricants, emulsifiers, pigments, optical brighteners, flameproofing agents, antistatics or blowing agents.

6. The use of a polyolefin molding composition as claimed in one or more of claims 1 to 5, where the nucleating agents used are finely ground talc, sodium benzoate or sorbitol derivatives.

## Revendications

1. Utilisation d'une matière moulable de polyoléfine pour la fabrication de pièces moulées par injection, constituée essentiellement d'une polyoléfine, qui dérive d'une oléfine avec au moins 3 atomes de carbone de formule R^{a}-CH = CH-R^{b}, dans laquelle R^{a} et R^{b} sont identiques ou différents et représentent un atome d'hydrogène ou un alkyle en C₁-C₁₅, linéaire ou ramifié, ou R^{a} et R^{b} forment un cycle avec les atomes les reliant, dans laquelle la matière moulable de polyoléfine peut contenir comme co-monomère jusqu'à 10% en poids d'éthylène ou une deuxième oléfine avec la signification ci-dessus mentionnée, avec une masse molaire M_{w} > 80 000 g/mol, une polydispersivité M_{w}/Mₙ de 1,8 à 3,5, un indice de viscosité > 70 cm³/g, un point de fusion de 130 à 160°C, une longueur de séquence isotactique de 30 - 100, une transparence orientée > 30% et une partie extractible à l'éther inférieure à 2% en poids.

2. Utilisation d'une matière moulable de polyoléfine selon la revendication 1 avec une masse molaire M_{w} > 100 000 g/mol, une polydispersivité M_{w}/Mₙ de 2,0 à 3,0, un indice de viscosité > 100 cm³/g et un point de fusion de 140 à 160°C.

3. Utilisation d'une matière moulable de polyoléfine selon la revendication 1 ou 2, dans laquelle la matière moulable de polyoléfine contient jusqu'à 10% en poids d'une deuxième oléfine avec la signification ci-dessus mentionnée ou jusqu'à 10% en poids d'éthylène.

4. Utilisation d'une matière moulable de polyoléfine selon une ou plusieurs des revendications 1 à 3, dans laquelle la polyoléfine est le polypropylène.

5. Utilisation d'une matière moulable de polyoléfine selon une ou plusieurs des revendications 1 à 4, dans laquelle celle-ci contient en outre des agents de nucléation, des stabilisants, des antioxydants, des absorbeurs d'UV, des agents de protection contre la lumière, des désactiveurs métalliques, des agents de capture de radicaux, des charges et des agents de renforcement, des agents de compatibilité, des plastifiants, des agents lubrifiants, des émulsifiants, des pigments, des agents de blanchiment optique, des agents ignifugeants, des agents antistatiques ou des agents moussants.

6. Utilisation d'une matière moulable de polyoléfine selon une ou plusieurs des revendications 1 à 5, dans laquelle on utilise comme agents de nucléation du talc finement moulu, du benzoate de sodium ou des dérivés du sorbitol.
